# EUROPÄISCHE PATENTSCHRIFT

(11) **EP 3 362 730 B1**
(45) Veröffentlichungstag und Bekanntmachung des Hinweises auf die Patenterteilung: **09.11.2022**
(21) Anmeldenummer: 16777620.2
(22) Anmeldetag: 27.09.2016
(51) Int. Cl.: F16L 59/14, F16L 5/10, F25D 23/06, H02G 3/22

(54) **HAUSHALTSGERÄT MIT SCHAUMDICHTUNG FÜR ANORDNUNG SOWIE VERFAHREN ZUM HERSTELLEN EINER ENTSPRECHENDEN ANORDNUNG**
DOMESTIC APPLIANCE WITH FOAM SEAL FOR ARRANGEMENT, AND METHOD FOR PRODUCING A CORRESPONDING ARRANGEMENT
APPAREIL MÉNAGER À JOINT D'ÉTANCHÉITE EN MOUSSE ET PROCÉDÉ DE FABRICATION D'UN ENSEMBLE CORRESPONDANT

(30) Priorität: 14.10.2015 DE 102015219942
(43) Veröffentlichungstag der Anmeldung: 22.08.2018
(73) Patentinhaber: BSH Hausgeräte GmbH, 81739 München (DE)
(72) Erfinder: VOGL, Andreas, 89437 Haunsheim (DE); STROH, Roman, 89537 Giengen (DE)
(86) Internationale Anmeldenummer: PCT/EP2016/072899
(87) Internationale Veröffentlichungsnummer: WO 2017/063863

(56) Entgegenhaltungen:
- WO-A2-2005/045335
- US-A- 4 186 945
- US-A1- 2004 239 109

## Beschreibung

Die Erfindung betrifft ein Haushaltsgerät mit einer Wand und einem durch die Wand begrenzten Zwischenraum. In dem Zwischenraum ist ein thermisch isolierendes Schaummaterial enthalten. Die Wand weist ein Loch auf, durch welches ein hindurchgeführtes hohles Abdichtteil angeordnet ist. Dieses Abdichtteil erstreckt sich beidseits der Wand. In dem Abdichtteil ist eine Leitung und/oder ein Rohr geführt. Des Weiteren betrifft die Erfindung auch ein Verfahren zum Herstellen einer einen Schaumdurchtritt hemmenden Anordnung in einem Haushaltsgerät.

Bei Haushaltsgeräten, insbesondere Haushaltskältegeräten, ist es bekannt, dass elektrische Leitungen, beispielsweise für eine Beleuchtung oder eine Regelungstechnik etc., oder Rohre, die Kältemittel eines Kältekreislaufs des Haushaltskältegeräts führen, eingesetzt sind. Das Verlegen beziehungsweise der Verlauf dieser Leitungen und/oder Rohre ist geräteabhängig und von dem Gehäuseinneren zur Gehäuseaußenseite erfolgend. Dabei werden vereinzelt Leitungen und aneinander liegende Rohre sowie auch Kabel oder ganze Stränge von Kabeln oder Rohren verlegt. Fertigungsbedingt werden diese Leitungen und/oder Rohre am vormontierten Gehäuse zuerst angebracht. Das Gehäuse wird dann erst in weiteren Fertigungsschritten mit dem thermisch isolierenden Schaummaterial ausgefüllt.

Bei bekannten Kunststoffkühlgutbehältern beziehungsweise bei Gehäuserückwänden aus einem Aluminiumverbund oder einem beschichteten Stahlblech werden entsprechend Lochungen oder Stanzungen vorgenommen. Die Löcher sind dabei scharfkantig und/oder kraterartig. Die Materialstärken sind abhängig vom Herstellungsprozess, beispielsweise einem Vakuumtiefziehen des Kühlgutbehälters beziehungsweise eines Innenbehälters, der mit seinen Wänden einen Aufnahmeraum für Lebensmittel des Haushaltskältegeräts begrenzt. Üblicherweise werden für die Rohre die Abdichtteile beziehungsweise Durchführungen mit Klebebändern abgedichtet. Zudem werden spezielle Dichtteile eingesetzt, die aus Gummi oder gummiähnlichen Dichtkörpern bestehen, die dann die Abdichtteile darstellen. Teilweise werden dichtende Formteile, die aus mehrteiligen Komponenten zusammengesetzt werden oder Bauteile, die mit Filmscharnieren versehen sind, verwendet. Kabelbäume oder Kabelstränge oder mehrere aneinander liegende Rohre werden mit elastischen Dichtungsbändern umwickelt oder anhand knetender Dichtmaterialien abgedichtet.

Bei diesen bekannten Ausführungen tritt jedoch der Nachteil auf, dass beim Schäumprozess und somit beim Einbringen des thermisch isolierenden Schaummaterials dieses über das Abdichtteil, welches sich in dem Loch der Wand beidseits der Wand erstreckt, nach außen tritt. Dadurch ist dann auch dieses Schaummaterial nach außen hin sichtbar und es muss in einem weiteren Schritt entfernt werden. Dadurch kann es dann auch wiederum zu Beschädigungen der hindurchgeführten Leitungen und/oder Rohre kommen.

Aus der US 2004/0239109 A1 ist ein fluidleitender Verbinder bekannt.

Aus der WO 2005/045335 A2 ist ein Kühlschrank bekannt, der einen Schottstutzen aufweist. Dieser Schottstutzen ist durch eine Wand, die einen thermisch isolierten Bereich begrenzt, angeordnet. Er weist integrierte Winkelstutzen auf, in welche jeweils ein Schlauch eingeführt ist.

Darüber hinaus ist aus der US 4 186 945 A ein Kühlgerät bekannt, bei welchem ein hülsenartiges Bauteil durch zwei, einen mit thermischen Isolationsmaterial gefüllten Zwischenraum begrenzenden Wänden hindurchgeführt ist. In dieser Hülse ist eine Leitung verlegt. Darüber hinaus sind separate Stopfen vorgesehen, die die Hülse jeweils endseitig verschließen und durch welche das Rohr ebenfalls hindurchgeführt ist.

Es ist Aufgabe der vorliegenden Erfindung, ein Haushaltsgerät sowie ein Verfahren zu schaffen, bei welchen eine Schnittstelle, an welcher Leitungen und/oder Rohre über ein Abdichtteil nach außen geführt werden, schaumdichter ausgebildet wird.

Diese Aufgabe wird durch ein Haushaltsgerät und ein Verfahren gemäß den unabhängigen Ansprüchen gelöst.

Ein erfindungsgemäßes Haushaltsgerät umfasst eine Wand und einen durch die Wand begrenzten Zwischenraum. In dem Zwischenraum ist ein thermisch isolierendes Schaummaterial enthalten. Die Wand weist ein Loch auf, wobei durch dieses Loch ein zur Wand separates hohles Abdichtteil geführt ist, so dass sich das Abdichtteil beidseits der Wand erstreckt. In dem Abdichtteil ist eine Leitung und/oder ein Rohr geführt. Ein wesentlicher Gedanke der Erfindung ist darin zu sehen, dass zumindest ein Schlauch ausgebildet ist, in dem die Leitung und/oder das Rohr geführt ist. Der Schlauch ist mit dem Abdichtteil gekoppelt und an einem dem Loch abgewandten Ende des Abdichtteils aus dem Abdichtteil herausragend angeordnet. Durch dieses spezifische Bauteil, nämlich den Schlauch, dessen Anordnung und dessen Erstreckung ist es ermöglicht, dass der eingebrachte thermisch isolierende Schaum nicht über das Abdichtteil hindurch aus dem Zwischenraum nach außen tritt.

Der Schlauch kann als vielfältig gestalteter Hohlkörper verstanden werden, der beispielsweise auch ein Rohr sein kann.

Vorzugsweise erstreckt sich der Schlauch mit einem Ende in das Abdichtteil hinein. Durch eine derartige Ausgestaltung ist praktisch in dem Abdichtteil nochmals ein Element, nämlich der Schlauch, eingeführt, in dem dann wiederum die Leitung und/oder das Rohr verlegt sind. Insbesondere ist durch diese Ausführung in besonderem Maße das Ausdringen von Isolationsschaum vermeidbar, denn durch den innen liegenden Schlauch wird auch das Volumen des Abdichtteils verkleinert und das Weiterwandern des Isolationsschaums noch wirksamer gehemmt.

Vorzugsweise ist vorgesehen, dass eine Außenseite des Schlauchs uneben ausgebildet ist. Dies ist eine besonders vorteilhafte Ausführung, denn dann wird der eingebrachte Schaum, der sich in diesem Zustand noch bewegt und aufquillt, gehemmt und an einem Durchtritt durch das Abdichtteil nach außen gehindert. Durch diese Unebenheit wird somit eine Art Aufhaltestruktur geschaffen, durch die das ungehinderte Fortbewegen des Schaums durch das Abdichtteil nach außen verhindert ist.

Erfindungsgemäß ist vorgesehen, dass der Schlauch ein Wellschlauch ist. Dies ist bezüglich der Unebenheit des Schlauchs an einer Außenseite eine besonders vorteilhafte Ausführung. Zum einen wird das Aufhalten des eingebrachten thermisch isolierenden Schaummaterials besonders begünstigt, andererseits ist ein Wellschlauch auch ein in sich flexibles Bauteil, welches dann einfach montiert werden kann und auch sich individuell verformen kann, so dass auch die darin geführten Leitungen und/oder Rohre nicht nur geradlinig, sondern auch in vielfältigster Weise umgebogen verlegt werden können.

Vorzugsweise ist vorgesehen, dass der Schlauch aus Polypropylen ist. Es begünstigt die oben genannten Vorteile nochmals und es ist dadurch auch ein dauerhaft stabiles und verschleißarmes Material des Schlauchs gegeben.

Vorzugsweise ist vorgesehen, dass der Schlauch ein zum Abdichtteil separates Teil ist. Dadurch kann den individuellen Anforderungen nochmals verbessert Rechnung getragen werden. Durch die Ausgestaltung als einzelne Bauteile kann die Montage des Schlauchs dennoch einfach erfolgen und die Geometrie sowie die materielle Gestaltung unabhängig vom Abdichtteil individuell erfolgen. Dadurch kann den jeweiligen Bedürfnissen besonders gut Rechnung getragen werden.

Es kann jedoch auch vorgesehen sein, dass der Schlauch und das Abdichtteil einstückig ausgebildet sind.

Bei einer Ausführung, bei welcher der Schlauch und das Abdichtteil separate Teile sind, ist in einer vorteilhaften Ausführung der Schlauch mit dem Abdichtteil verrastet. Dies ist eine mechanisch sichere Verbindung, die darüber hinaus auch schnell zu montieren ist. Darüber hinaus wird durch die Rastvorrichtung auch eine haptische Rückmeldung des montierten Endzustands gegeben, so dass auch eindeutig der montierte Endzustand erkannt wird. Auch dies hat Vorteile bei der Montage, die somit auch schnell im Hinblick auf die zu erreichende Endposition zwischen den beiden Teilen erfolgen kann.

Vorzugsweise ist vorgesehen, dass die Länge des Schlauchs und/oder der Querschnitt des Schlauchs abhängig von der darin geführten Leitungen und/oder der darin geführten Rohre ist. Die Länge des Schlauchs und/oder der Querschnitt des Schlauchs kann zusätzlich oder anstatt dazu auch abhängig von dem Querschnitt einer darin geführten Leitung und/oder dem Querschnitt eines darin geführten Rohres sein. Durch diese Geometrieanpassung des Schlauchs kann das Hemmen des austretenden Schaummaterials über das Abdichtteil nochmals verbessert werden. Denn es kann in dem Zusammenhang die Geometrie des Schlauchs so angepasst werden, dass die darin geführten Leitungen und/oder Rohre nicht unerwünscht gequetscht werden, andererseits kein zu großes Spiel vorhanden ist, so dass auch kein unerwünschter Schaumaustritt zwischen dem Schlauch und den darin geführten Leitungen und/oder Rohren hin zum Abdichtteil erfolgt.

In vorteilhafter Weise ist vorgesehen, dass der Schlauch ein Totlaufteil beziehungsweise ein Blockadeleitungskörper für das thermisch isolierende Schaummaterial bei dessen Einschäumung ist.

Vorzugsweise weist das Abdichtteil eine Nut an seiner Außenseite auf, in welcher sich die Wand erstreckt, so dass das Abdichtteil in dem Loch auch axial gesichert und somit im Hinblick auf die Längsachse des Lochs und des Abdichtteils gesichert angeordnet ist. Es kann zusätzlich oder anstatt dazu auch vorgesehen sein, dass das Abdichtteil einen Flansch aufweist, welcher an einer dem Zwischenraum zugewandten Innenseite der Wand anliegt. Dadurch kann ein Austritt des Schaummaterials zwischen der Außenseite des Abdichtteils und dem Loch verhindert werden. Die schaumdichte Anordnung ist dadurch nochmals begünstigt.

Es kann vorgesehen sein, dass das Abdichtteil aus Kunststoff oder einem Elastomer ausgebildet ist.

Die Erfindung betrifft darüber hinaus auch ein Verfahren zum Herstellen einer einen Schaumdurchtritt hemmenden Anordnung in einem Haushaltsgerät, bei welchem in ein Loch in einer einen Zwischenraum begrenzenden Wand des Haushaltsgeräts ein hohles Abdichtteil angebracht wird und zwar derart, dass es sich beidseits der Wand erstreckt. Ein wesentlicher Gedanke des Herstellungsverfahrens ist darin zu sehen, dass zumindest ein Schlauch sich in das Abdichtteil erstreckend und auf der dem Loch abgewandten Seite aus dem Abdichtteil herauserstreckend ausgebildet ist. Eine Leitung und/oder ein Rohr wird durch den Schlauch geführt, wobei ein thermisch isolierendes Schaummaterial nach dem Anbringen des Abdichtteils und des Schlauchs in den Zwischenraum eingebracht wird und durch den Schlauch ein Schaumdurchtritt des eingebrachten Schaummaterials zum Loch hin gehemmt wird. Der Schlauch wird erfindungsgemäß als ein Wellschlauch bereitgestellt. Die dadurch erreichbaren Vorteile wurden bereits oben zum Haushaltsgerät genannt. Vorteilhafte Ausführungen des Haushaltsgeräts sind als vorteilhafte Ausführungen des Verfahrens anzusehen, wobei durch die gegenständlichen Merkmale die individuellen Vorteile beim Herstellen des Haushaltsgeräts erzielt werden, insbesondere im Hinblick auf die Schaumdurchtrittshemmung durch das Loch.

Mit den Angaben "oben", "unten", "vorne", "hinten, "horizontal", "vertikal", "Tiefenrichtung", "Breitenrichtung", "Höhenrichtung" sind die bei bestimmungsgemäßen Gebrauch und bestimmungsgemäßem Anordnen des Geräts und bei einem dann vor dem Gerät stehenden und in Richtung des Geräts blickenden Beobachter gegebenen Positionen und Orientierungen angegeben.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen

Kombinationen verwendbar, solange sie von den Ansprüchen gedeckt sind. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind, solange sie von den Ansprüchen gedeckt sind.

Ausführungsbeispiele der Erfindung werden nachfolgend anhand schematischer Zeichnungen näher erläutert. Es zeigen:
- Fig. 1: eine perspektivische Darstellung eines Ausführungsbeispiels eines erfindungsgemäßen Haushaltsgeräts;
- Fig. 2: die Darstellung eines Ausführungsbeispiels einer einen Schaumdurchtritt hemmenden Anordnung in dem Haushaltsgerät gemäß Fig. 1 in teilweise geschnittener Darstellung;
- Fig. 3: eine weitere Darstellung eines Ausführungsbeispiels der Anordnung zur Hemmung eines Schaumdurchtritts; und
- Fig. 4: eine weitere Darstellung einer entsprechenden Anordnung gemäß eines weiteren Ausführungsbeispiels.

In den Figuren werden gleiche oder funktionsgleiche Elemente mit den gleichen Bezugszeichen versehen.

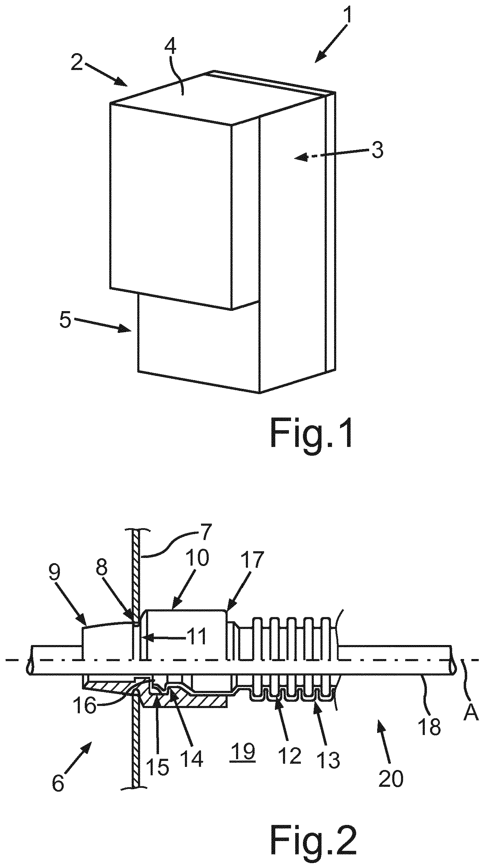

In Fig. 1 ist ein Haushaltsgerät 1 in perspektivischer Darstellung seitlich und von hinten gezeigt, welches ein Haushaltskältegerät ist und welches somit zum Aufnehmen von Lebensmitteln ausgebildet ist. Das Haushaltsgerät 1 kann somit ein Kühlgerät oder ein Gefriergerät oder ein Kühl-Gefrier-Kombigerät sein.

Das Haushaltsgerät 1 umfasst ein Gehäuse 2, in dem zumindest ein Aufnahmeraum 3 für Lebensmittel ausgebildet ist. Der Aufnahmeraum 3 ist durch Wände eines nicht dargestellten Innenbehälters begrenzt, der in dem Gehäuse 2 aufgenommen ist. Zwischen dem Innenbehälter und dem zum Gehäuse 2 gehörenden Außenbehälter 4 ist ein Zwischenraum ausgebildet, in dem ein thermisch isolierendes Material, insbesondere ein Schaummaterial, eingebracht ist.

Das Haushaltsgerät 1 umfasst darüber hinaus auch einen Maschinenraum 5, der im unteren hinteren Bereich des Gehäuses 2 ausgebildet ist. In dem Maschinenraum 5 sind Komponenten eines Kältekreislaufs angeordnet. Diese Komponenten sind dann über Rohre, in denen ein Kältemittel zirkuliert, mit Komponenten des Kältekreislaufs, die im Inneren des Gehäuses 2 angeordnet sind, verbunden.

Darüber hinaus sind auch noch Kabel beziehungsweise Leitungen angeordnet, mittels welchen insbesondere elektrische Signale übertragen werden. Die Leitungen können zu Bedienvorrichtungen oder Anzeigevorrichtungen geführt sein.

In Fig. 2 ist in einem Ausführungsbeispiel eine Anordnung 6 gezeigt, die in dem Haushaltsgerät 1 verbaut ist. Die Anordnung 6 umfasst eine Wand 7, die eine Wand des Innenbehälters sein kann. Die Wand 7 kann jedoch auch beispielsweise eine derartige sein, die den Maschinenraum 5 begrenzt und somit außenliegend angeordnet ist und somit eine Wand des Außengehäuses 4 ist. Abhängig davon, welche Rohre und/oder Leitungen mit der Anordnung 6 geführt werden sollen, ist die jeweilige individuelle Position, wie sie oben beispielhaft genannt wurde, möglich.

Die Wand 7 weist ein Loch 8 auf, durch welches sich ein Abdichtteil 9 hindurch erstreckt und somit beidseits der Wand 7 angeordnet ist. An einer Außenseite 10 des Abdichtteils 9 ist eine Nut 11 ausgebildet, in die sich die Wand 7 hinein erstreckt.

Das Abdichtteil 9 ist einstückig ausgebildet und kann beispielsweise aus einem Kunststoff oder einem gummiähnlichen Material oder aus Elastomer sein.

Die einen Schaumdurchtritt hemmende Anordnung 6 umfasst darüber hinaus einen Schlauch 12. Der Schlauch 12 ist in der gezeigten Ausführung ebenfalls ein einstückiges Bauteil und ist vorzugsweise ein Wellschlauch, insbesondere aus Polypropylen. Der Schlauch 12 weist eine unebene Außenseite 13 auf, die durch beabstandete angeordnete und in azimutaler Richtung um eine Längsachse A umlaufende Stege beziehungsweise Flansche gebildet ist.

Der Schlauch 12 ist somit ebenfalls, wie das Abdichtteil 9, hohl ausgebildet. Der Schlauch 12 erstreckt sich mit einem ersten Ende 14 in das Innere des Abdichtteils 9 hinein und ist dort mit diesem verbunden, insbesondere verrastet. Dazu ist an einer Innenseite des Abdichtteils 9 eine Rastaufnahme 15 angeordnet, in welche ein Rastelement 16 an dem vorderen Ende 14 eingerastet ist.

Darüber hinaus ist der Schlauch 12 so ausgebildet, dass er in Richtung der Achse A betrachtet länger als das Abdichtteil 9 ist und sich somit auf der dem Loch 8 und somit auch der Wand 7 abgewandten Seite 17 des Abdichtteils 9 aus dem Abdichtteil 9 herauserstreckt.

Insbesondere ist vorgesehen, dass die axiale Länge des Schlauchs 12 und/oder der senkrecht zur Achse A bemessene Querschnitt des Schlauchs 12 abhängig von der Anzahl der darin geführten Leitungen und/oder Rohre und/oder abhängig von einem Querschnitt einer darin geführten Leitung und/oder einem Querschnitt eines darin geführten Rohres ausgebildet ist.

In Fig. 2 ist beispielhaft lediglich ein Rohr 18 gezeigt, welches in dem Schlauch 12 und somit auch in dem Abdichtteil 9 von einem Zwischenraum 19, in dem das Schaummaterial 20 enthalten ist, nach außen geführt wird. Nach außen führen kann in dem Zusammenhang bedeuten, dass dieses Rohr 18 aus dem Gehäuse 2 heraus geführt wird und beispielsweise in den Maschinenraum 5 geführt wird, oder dass dieses Rohr 18 in den Aufnahmeraum 3 geführt wird.

Der Schlauch 12 ist durch seine Position und seine Geometrie als ein Totlaufteil beziehungsweise ein Blockadeleitungskörper ausgebildet, welcher zur Hemmung des Schaumdurchtritts des Schaummaterials 20 aus dem Zwischenraum 19 durch das Abdichtteil 9 hindurch ausgebildet ist.

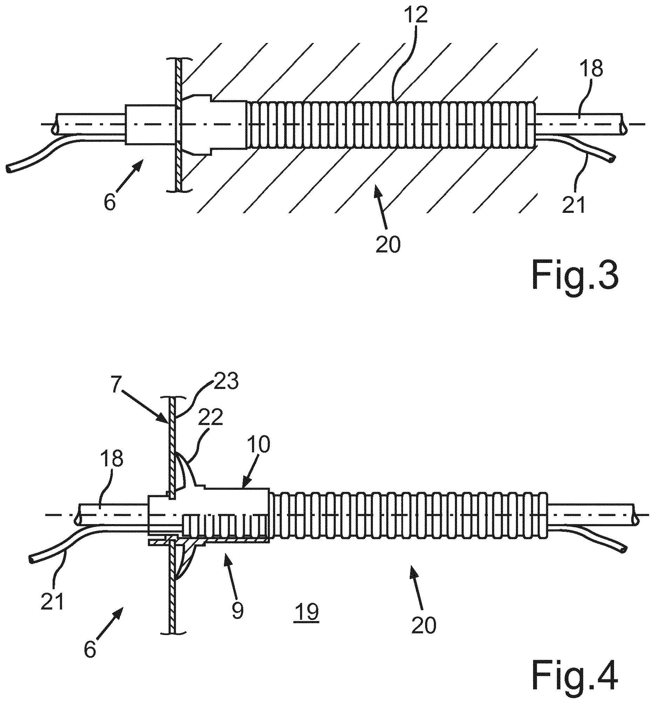

Bei der Montage wird vorgesehen, dass nach Anbringen des Abdichtteils 9 und des Schlauchs 12 und dem Hindurchführen zumindest eines Rohrs 18 und/oder zumindest einer Leitung 21 (Fig. 3), erst dann das Schaummaterial 20 in den Zwischenraum 19 eingebracht wird. Mit dem Schlauch 12 wird dann das Hindurchtreten von sich noch bewegenden, aufschäumenden Schaummaterials 20 durch das Innere des Abdichtteils 9 hindurch gehemmt. Der Schaumdurchtritt zwischen der Außenseite 10 des Abdichtteils 9 und dem Loch 8 wird insbesondere dadurch gehemmt, dass die Wand 7 in die Nut 11 eintauchend angeordnet ist.

In Fig. 3 ist in einer Seitenansicht ein weiteres Ausführungsbeispiel gezeigt, bei welchem im Unterschied zur Ausgestaltung in Fig. 2 ein in axialer Richtung längerer Schlauch 12 vorhanden ist. Hier ist dies deswegen der Fall, da in dem Schlauch 12 nicht nur ein Rohr 18 sondern auch die Leitung 21 geführt sind.

In Fig. 4 ist in einer weiteren teilweise geschnittenen Seitenansicht eine Anordnung 6 gezeigt, bei welcher im Unterschied zur Ausgestaltung in Fig. 3 das Abdichtteil 9 anderweitig ausgebildet ist. Das Abdichtteil 9 weist bei dieser Ausführung einen an der Außenseite 10 radial umlaufenden Flansch 22 auf, der an einer dem Zwischenraum 19 zugewandten Innenseite 23 der Wand 7 anliegt.

Es kann auch vorgesehen sein, dass das Abdichtteil 9 und der Schlauch 12 einstückig, insbesondere als Kunststoffspritzbauteil, ausgebildet sind.

Der Schlauch 12 ist insbesondere derart ausgebildet, dass die Toleranzen der Wandstärke der Wand 7 ausgeglichen sind. Die Verbindung zwischen dem Abdichtteil 9 und dem Schlauch 12 ist schaumdicht gestaltet, wobei insbesondere dann, wenn die beiden Teile Kunststoffteile sind, ein Verrasten vorgesehen ist. Bei einer Ausgestaltung insbesondere des Abdichtteils 9 aus einem Elastomer oder eine gummiähnlichen Material ist diese Verbindung zwischen dem Abdichtteil 9 und dem Schlauch 12 durch eine entsprechende Passungsauswahl realisiert.

Durch die Ausgestaltungen der Anordnungen 6 wird das Abdichten eines Rohres 18 und/oder einer Leitung 21 oder mehrere Rohre 18 und/oder mehrerer Leitungen 21 zueinander und zwischen dem Schlauch 12 mit dem Abdichtteil 9 erreicht. Das Schaummaterial 20 härtet, abhängig von der jeweiligen Situation und somit individuellen Ausgestaltung mit der vorher individuell vorgegebenen Geometrie des Schlauchs 12, insbesondere dessen Länge und/oder dessen Querschnitt, in diesem Schlauch 12 direkt aus.

Durch diesen Schlauch 12 kann ein Abdichten einzelner oder mehrerer Leitungen 21 und/oder Rohre 18 ermöglicht werden. Es können somit auch Rohre 18 und/oder Leitungen 21 mit unterschiedlichem Durchmesser zueinander abgedichtet werden. Die Flexibilität des Schlauchs 12, insbesondere bei einer Ausgestaltung aus Polypropylen, lässt darüber hinaus verschiedene Biegekonturen zu, so dass auch relativ scharfe Umbiegungen, insbesondere im Winkel von 90°, ermöglicht sind.

Darüber hinaus können bekannte und verwendete Stanzkonturen am Gehäuseeintritt beziehungsweise am Gehäuseaustritt und somit insbesondere in der Wand 7 beibehalten werden.

### Bezugszeichenliste

- 1: Haushaltsgerät
- 2: Gehäuse
- 3: Aufnahmeraum
- 4: Außenbehälter
- 5: Maschinenraum
- 6: Anordnung
- 7: Wand
- 8: Loch
- 9: Abdichtteil
- 10: Außenseite
- 11: Nut
- 12: Schlauch
- 13: Außenseite
- 14: erstes Ende
- 15: Rastaufnahme
- 16: Rastelement
- 17: Seite
- 18: Rohr
- 19: Zwischenraum
- 20: Schaummaterial
- 21: Leitung
- 22: Flansch
- 23: Innenseite
- A: Längsachse

## Patentansprüche

1. Haushaltsgerät (1) mit einer Wand (7) und einem durch die Wand (7) begrenzten Zwischenraum (19), in dem ein thermisch isolierendes Schaummaterial (20) enthalten ist, und einer durch ein Loch (8) in der Wand (7) geführtes hohles Abdichtteil (9), welches sich beidseits der Wand (7) erstreckt, und in welchem eine Leitung (21) und/oder ein Rohr (18) geführt ist, wobei zumindest ein Schlauch (12) ausgebildet ist, in dem die Leitung (21) und/oder das Rohr (18) geführt ist, und welcher mit dem Abdichtteil (9) gekoppelt ist und an einem dem Loch (8) abgewandten Ende (17) des Abdichtteils (9) aus dem Abdichtteil (9) herausragt, **dadurch gekennzeichnet, dass** der Schlauch ein Wellschlauch ist.

2. Haushaltsgerät (1) nach Anspruch 1, **dadurch gekennzeichnet, dass** sich der Schlauch (12) mit einem Ende (14) in das Abdichtteil (9) hinein erstreckt.

3. Haushaltsgerät (1) nach Anspruch 1 oder 2, **dadurch gekennzeichnet, dass** eine Außenseite (13) des Schlauchs (12) uneben ist.

4. Haushaltsgerät (1) nach einem der vorhergehenden Ansprüche, **dadurch gekennzeichnet, dass** der Schlauch (12) aus Polypropylen ist.

5. Haushaltsgerät (1) nach einem der vorhergehenden Ansprüche, **dadurch gekennzeichnet, dass** der Schlauch (12) ein zum Abdichtteil (9) separates Teil ist.

6. Haushaltsgerät (1) nach Anspruch 5, **dadurch gekennzeichnet, dass** der Schlauch (12) mit dem Abdichtteil (9) verrastet ist.

7. Haushaltsgerät (1) nach einem der vorhergehenden Ansprüche, **dadurch gekennzeichnet, dass** die Länge des Schlauchs (12) und/oder der Querschnitt des Schlauchs (12) abhängig von der Anzahl der darin geführten Leitungen (21) und/oder Rohren (18) und/oder abhängig von einem Querschnitt einer darin geführten Leitung (21) und/oder eines Rohres (18) ist.

8. Haushaltsgerät (1) nach einem der vorhergehenden Ansprüche, **dadurch gekennzeichnet, dass** der Schlauch (12) ein Totlaufteil für das thermisch isolierende Schaummaterial (20) bei dessen Einschäumung ist.

9. Haushaltsgerät (1) nach einem der vorhergehenden Ansprüche, **dadurch gekennzeichnet, dass** das Abdichtteil (9) eine Nut (11) aufweist, in welche sich die Wand (7) erstreckt und/oder einen Flansch (22) aufweist, welcher an einer dem Zwischenraum (19) zugewandten Innenseite (23) der Wand (7) anliegt.

10. Haushaltsgerät (1) nach einem der vorhergehenden Ansprüche, **dadurch gekennzeichnet, dass** das Abdichtteil (9) aus Kunststoff oder einem Elastomer ist.

11. Verfahren zum Herstellen einer einen Schaumdurchtritt hemmenden Anordnung (6) in einem Haushaltsgerät (1), bei welchem in ein Loch (8) in einer einen Zwischenraum (19) begrenzenden Wand (7) ein hohles Abdichtteil (9) angebracht wird derart, dass es sich beidseits der Wand (7) erstreckt, wobei zumindest ein Schlauch (12) sich in das Abdichtteil (9) erstreckend und auf einem dem Loch (8) abgewandten Ende (17) aus dem Abdichtteil (9) herauserstreckend positioniert wird, und eine Leitung (21) und/oder ein Rohr (18) durch den Schlauch (12) geführt werden, **dadurch gekennzeichnet, dass** ein thermisch isolierendes Schaummaterial (20) nach dem Anbringen des Abdichtteils (9) und des Schlauchs (12) in den Zwischenraum (19) eingebracht wird und durch den Schlauch (12) ein Schaumdurchtritt des eingebrachten Schaummaterials (20) zumindest durch das Abdichtteil (9) zum Loch (8) hin gehemmt wird, wobei der Schlauch (12) als ein Wellschlauch bereitgestellt wird.

## Claims

1. Household appliance (1) having a wall (7) and a gap (19), bounded by the wall (7), in which a thermally insulated foam material (20) is contained, and a hollow sealing part (9) guided through a hole (8) in the wall (7), which extends on both sides of the wall (7) and in which a line (21) and/or a pipe (18) is guided, wherein at least one hose (12) is embodied, in which the line (21) and/or the pipe (18) is guided and which is coupled to the sealing part (9) and at an end (17) of the sealing part (9) facing away from the hole (8) projects out from the sealing part (9), **characterised in that** the hose is a corrugated hose.

2. Household appliance (1) according to claim 1, **characterised in that** the hose (12) extends with one end (14) into the sealing part (9).

3. Household appliance (1) according to claim 1 or 2, **characterised in that** an outer face (13) of the hose (12) is rough.

4. Household appliance (1) according to one of the preceding claims, **characterised in that** the hose (12) is made from polypropylene.

5. Household appliance (1) according to one of the preceding claims, **characterised in that** the hose (12) is a part which is separate from the sealing part (9).

6. Household appliance (1) according to claim 5, **characterised in that** the hose (12) is locked to the sealing part (9).

7. Household appliance (1) according to one of the preceding claims, **characterised in that** the length of the hose (12) and/or the cross-section of the hose (12) is/are dependent on the number of lines (21) and/or tubes (18) guided therein and/or dependent on a cross-section of a line (21) and/or a tube (18) guided therein.

8. Household appliance (1) according to one of the preceding claims, **characterised in that** the hose (12) is a dead runner for the thermally insulating foam material (20) during its foaming.

9. Household appliance (1) according to one of the preceding claims, **characterised in that** the sealing part (9) has a groove (11) in which the wall (7) extends and/or has a flange (22), which rests against an inner face (23) of the wall (7) which faces the gap (19).

10. Household appliance (1) according to one of the preceding claims, **characterised in that** the sealing part (9) is made of plastic or an elastomer.

11. Method for producing an arrangement (6) inhibiting the passage of foam in a household appliance (1), in which a hollow sealing part (9) is attached in a hole (8) in a wall (7) bounding a gap (19) so that it extends on both sides of the wall (7), wherein at least one hose (12) is positioned so as to extend into the sealing part (9) and out of the sealing part (9) on an end (17) facing away from the hole (8), and a line (21) and/or a tube (18) are guided through the hose (12), **characterised in that** after attaching the sealing part (9) and the hose (12) a thermally insulating foam material (20) is introduced into the gap (19) and a passage of foam of the introduced foam material (20) at least through the sealing part (9) to the hole (8) is inhibited by the hose (12), wherein the hose (12) is provided as a corrugated hose.

## Revendications

1. Appareil ménager (1) comprenant une paroi (7) et un espace intermédiaire (19) délimité par la paroi (7) dans lequel est contenu un matériau en mousse thermo-isolant (20), et une partie d'étanchéité (9) creuse dirigée à travers un orifice (8) dans la paroi (7), laquelle s'étend des deux côtés de la paroi (7), et dans laquelle un conduit (21) et/ou un tube (18) est dirigé, dans lequel au moins un flexible (12) est conçu dans lequel le conduit (21) et/ou le tube (18) est dirigé et lequel est couplé avec la partie d'étanchéité (9) et fait saillie de la partie d'étanchéité (9) à une extrémité (17) de la partie d'étanchéité (9) détournée de l'orifice (8), **caractérisé en ce que** le flexible est un flexible ondulé.

2. Appareil ménager (1) selon la revendication 1, **caractérisé en ce que** le flexible (12) s'étend à l'intérieur de la partie d'étanchéité (9) par une extrémité (14).

3. Appareil ménager (1) selon la revendication 1 ou 2, **caractérisé en ce qu'**une face extérieure (13) du flexible (12) n'est pas plane.

4. Appareil ménager (1) selon l'une des revendications précédentes, **caractérisé en ce que** le flexible (12) est en polypropylène.

5. Appareil ménager (1) selon l'une des revendications précédentes, **caractérisé en ce que** le flexible (12) est une partie séparée de la partie d'étanchéité (9).

6. Appareil ménager (1) selon la revendication 5, **caractérisé en ce que** le flexible (12) est encliqueté avec la partie d'étanchéité (9).

7. Appareil ménager (1) selon l'une des revendications précédentes, **caractérisé en ce que** la longueur du flexible (12) et/ou la section du flexible (12) est fonction du nombre des conduites (21) et/ou tubes (18) dirigé(e)s dedans et/ou fonction d'une section d'une conduite (21) ou d'un tube (18) dirigé(e) dedans.

8. Appareil ménager (1) selon l'une des revendications précédentes, **caractérisé en ce que** le flexible (12) est une partie de diminution pour le matériau en mousse thermo-isolant (20) lors du moussage de celui-ci.

9. Appareil ménager (1) selon l'une des revendications précédentes, **caractérisé en ce que** la partie d'étanchéité (9) présente une rainure (11) dans laquelle la paroi (7) s'étend et/ou présente une bride (22) qui repose contre un côté intérieur (23) de la paroi (7) tourné vers l'espace intermédiaire (19).

10. Appareil ménager (1) selon l'une des revendications précédentes, **caractérisé en ce que** la pièce d'étanchéité (9) est en plastique ou en élastomère.

11. Procédé de fabrication d'un agencement (6) empêchant un passage de mousse dans un appareil ménager (1), dans lequel une partie d'étanchéité (9) creuse est placée dans un orifice (8) dans une paroi (7) délimitant un espace intermédiaire (19), de telle sorte qu'elle s'étend des deux côtés de la paroi (7), dans lequel au moins un flexible (12) est positionné en s'étendant dans la partie d'étanchéité (9) et en s'étendant hors de la partie d'étanchéité (9) sur une extrémité (17) détournée de l'orifice (8), et une conduite (21) et/ou un tube (18) est dirigé(e) à travers le flexible (12), **caractérisé en ce qu'**un matériau en mousse thermo-isolant (20) est inséré dans l'espace intermédiaire (19) après le placement de la partie d'étanchéité (9) et du flexible (12), et le flexible (12) empêche une pénétration de mousse du matériau de mousse (20) inséré, au moins en direction de l'orifice (8) par la partie d'étanchéité (9), dans lequel le flexible (12) est fourni en tant qu'un flexible ondulé.
